# EUROPEAN PATENT APPLICATION

(11) **EP 4 546 621 A1**
(43) Date of publication of application: **30.04.2025**
(21) Application number: 23829832.7
(22) Date of filing: 30.05.2023
(51) Int. Cl.: H02K 11/215

(54) **MOTOR AND AUTOMATED GUIDED VEHICLE**

(30) Priority: 29.06.2022 CN 202210753665
(71) Applicant: Hangzhou Hikrobot Co., Ltd., Hangzhou, Zhejiang 310051 (CN)
(72) Inventor: HU, Zhaoqiang, Hangzhou, Zhejiang 310051 (CN); GAO, Hua, Hangzhou, Zhejiang 310051 (CN)
(74) Representative: Vogelbruch, Keang
(86) International application number: PCT/CN2023/097248
(87) International publication number: WO 2024/001647

(57) **Abstract**

A motor and an automated guided vehicle. The motor includes a motor housing provided with a motor cavity, a motor stator and a printed circuit board fixedly mounted in the motor cavity, a motor rotor rotatably mounted in the motor cavity, a magnetic disc rotatable synchronously with the motor rotor, and a first magnetic encoding chip and a second magnetic encoding chip disposed on opposite sides of the printed circuit board, where each of the first magnetic encoding chip and the second magnetic encoding chip cooperates with the magnetic disc to form a magnetic encoder. The motor can be used for driving the automated guided vehicle.

## Description

### TECHNICAL FIELD

Embodiments of the present invention relate to the field of motor control technology, and in particular to a motor and an automated guided vehicle.

### BACKGROUND

Rotary encoder, also known as shaft encoder, is an electromechanical device that converts rotational position or amount of rotation into analog or digital signals, which is generally mounted on an end surface of a rotating shaft in a rotating object. Rotary encoders are typically used in applications where precise rotational position and speed of a rotating shaft are required. For example, in applications involving positioning of motors, rotary encoders can be used to detect rotational angle and rotational position of a motor shaft.

Common rotary encoders include photoelectric encoders and magnetic encoders. In motors with rotary encoders, a "dual encoder" design in which a photoelectric encoder and a magnetic encoder are used simultaneously may be adopted in order to ensure the safety and reliability of the motors during operation.

However, the "dual encoder" design may impose limitations on the motors, such as large size and high requirements for mounting accuracy.

### SUMMARY

In a first aspect, there is provided a motor, including:
a motor housing provided with a motor cavity;
a motor stator and a printed circuit board fixedly mounted in the motor cavity;
a motor rotor rotatably mounted in the motor cavity;
a magnetic disc rotatable synchronously with the motor rotor; and
a first magnetic encoding chip and a second magnetic encoding chip disposed on opposite sides of the printed circuit board,
where each of the first magnetic encoding chip and the second magnetic encoding chip cooperates with the magnetic disc to form a magnetic encoder.

In the motor according to the embodiments of the present invention, the use of a magnetic encoder enables contactless position measurement, thereby reducing the risk of failure of (or even damage to) the encoder due to the vibration of a mechanical shaft during operation of a servo motor, and contributing to improving the stability and reliability of the operation of the motor.

In addition, a "dual magnetic encoder" design is adopted, where the first magnetic encoding chip and the second magnetic encoding chip are disposed on opposite sides of the printed circuit board, respectively, and the printed circuit board is disposed within the motor cavity and is mounted to the motor housing through a fastener. In this way, while meeting the requirements of the "dual encoder" design, it is possible to ensure the mounting accuracy through the same printed circuit, reducing the requirements for the mounting accuracy while facilitating the debugging of dual magnetic encoders.

Furthermore, the first magnetic encoding chip and the second magnetic encoding chip are disposed on opposite sides of the printed circuit board in the motor cavity, so as to make full use of space, which is beneficial to reducing the overall volume, and to reduce the influence of the external environment, which is conducive to improving the stability and reliability of the operation of the motor.

In some possible embodiments, the motor includes a motor shaft connected to the motor rotor, the motor shaft including:
an output end extending out of the motor cavity; and
a mounting end opposite to the output end and disposed in the motor cavity,
where the magnetic disc is disposed on an end surface of the mounting end.

In some possible embodiments, the printed circuit board is disposed on an opposite side of the magnetic disc, and the first magnetic encoding chip and the second magnetic encoding chip are located opposite to the magnetic disc.

In some possible embodiments, the motor shaft is of a shaft-like structure with a first axis as a central axis;
the first magnetic encoding chip is closer to the magnetic disc than the second magnetic encoding chip; and
there is a gap between the first magnetic encoding chip and the magnetic disc along a direction of the first axis.

In some possible embodiments, the magnetic disc is a circular disc with the first axis as a central axis, and the magnetic disc is of a radially magnetized permanent magnet structure including a single pair of magnetic poles or a plurality of pairs of magnetic poles with the first axis as an axis of symmetry.

In some possible embodiments, the gap between the first magnetic encoding chip and the magnetic disc along the direction of the first axis is 0.5 mm to 3 mm; and
the printed circuit board has a thickness of 0.8 mm to 1 mm.

In some possible embodiments, the magnetic disc has a diameter of 8 mm to 20 mm and a thickness of 2.5 mm.

In some possible embodiments, each of the first magnetic encoding chip and the second magnetic encoding chip cooperates with the magnetic disc to form an incremental magnetic encoder;
the first magnetic encoding chip has:
a first encoding output terminal for outputting a first encoded signal; and
a first Hall output terminal for outputting a first Hall signal, and
the second magnetic encoding chip has:
   a second encoding output terminal for outputting a second encoded signal, and
   a second Hall output terminal for outputting a second Hall signal.

In some possible embodiments, the first encoded signal and the second encoded signal are ABZ encoded signals, and each of the first encoding output terminal and the first encoding output terminal includes an A signal output channel, a B signal output channel, and a Z signal output channel; and
the first Hall signal and the second Hall signal are UVW Hall signals, and each of the first Hall output terminal and the second Hall output terminal includes a U signal output channel, a V signal output channel, and a W signal output channel.

In some possible embodiments, the first encoding output terminal and the first Hall output terminal are a same output terminal, and the first encoded signal and the first Hall signal are output in a time-sharing manner;
and/or
the second encoding output terminal and the second Hall output terminal are a same output terminal, and the second encoded signal and the second Hall signal are output in a time-sharing manner.

In some possible embodiments, the motor is a servo motor, which further includes a servo driver;
the first encoding output terminal, the first Hall output terminal, the second encoding output terminal, and the second Hall output terminal are all electrically connected to the servo driver; and
the servo driver controls the servo motor based on output signals from the first magnetic encoding chip and the second magnetic encoding chip.

In some possible embodiments, the servo driver controls the servo motor based on the first encoded signal and the second Hall signal, and is configured to report an error upon at least one of the first encoded signal or the second Hall signal is abnormal; or
the servo driver controls the servo motor based on the second encoded signal and the first Hall signal, and is configured to report an error upon at least one of the second encoded signal or the first Hall signal is abnormal.

In some possible embodiments, the printed circuit board includes:
a power conversion module configured to output an operating voltage to the first magnetic encoding chip and the second magnetic encoding chip; and
a temperature sensor disposed between the first magnetic encoding chip and the power conversion module and/or between the second magnetic encoding chip and the power conversion module,
where the temperature sensor is configured to cut off power supply when a temperature detected by the temperature sensor is higher than a preset value.

In some possible embodiments, the first magnetic encoding chip has a first programming port, and the second magnetic encoding chip has a second programming port; and
the printed circuit board is provided with a common programming port, which is connected to the first programming port and the second programming port.

In a second aspect, there is provided an automated guided vehicle, including:
a vehicle body;
an actuator mounted to the vehicle body; and
the motor of any one of the embodiments in the first aspect,
where the motor drives the actuator to be actuated.

The above automated guided vehicle has the same structure and beneficial technical effects as the motor according to some of the above embodiments, which will not be repeated herein.

### BRIEF DESCRIPTION OF DRAWINGS

FIG. 1 is a schematic structural diagram of a motor according to an embodiment of the present invention.
FIG. 2 is an exploded view of a structure of a motor according to an embodiment of the present invention at a mounting end.
FIG. 3 is a schematic structural diagram of a motor according to an embodiment of the present invention at a mounting end.
FIG. 4 is an architecture diagram of a printed circuit board and first and second magnetic encoding chips in a motor according to an embodiment of the present invention.
FIG. 5 is a schematic structural diagram of a servo motor according to an embodiment of the present invention.
FIG. 6 is an architecture diagram of a printed circuit board and a servo driver in a servo motor according to an embodiment of the present invention.
FIG. 7 is a schematic structural diagram of an automated guided vehicle according to an embodiment of the present invention.

### Description of reference numerals:

1-motor shaft, 101-output end, 102-mounting end, 2-motor housing, 201-front end cover, 202-main body, 203-rear end cover, 3-motor rotor, 4-motor cavity, 5-motor stator, 6-encoder bracket, 7-second magnetic encoding chip, 701-second encoding output terminal, 702-second Hall output terminal, 703-second programming port, 8-printed circuit board, 9-first magnetic encoding chip, 901-second encoding output terminal, 902-first Hall output terminal, 903-first programming port, 10-magnetic disc, 11-temperature sensor, 12-power conversion module, 13-common programming port, 14-servo driver, 15-signal transmission cable, 16-vehicle body, 17-walking wheel, L1-first axis.

### DETAILED DESCRIPTION

Technical solutions in some of embodiments of the present invention will be clearly and completely described below in conjunction with the accompanying drawings. It is apparent that, the described embodiments are merely a part of the embodiments of the present invention, but not all of the embodiments. All other embodiments obtained by those ordinary skilled in the art based on the embodiments provided in the present invention fall within the scope of protection of the present invention.

Unless the context requires otherwise, throughout the specification and claims, the term "including" is to be interpreted in an open, inclusive sense, that is, "including, but not limited to. In the description of the specification, the terms "an embodiment," "some embodiments," "exemplary embodiment," "example," or "some examples" are intended to indicate that a particular feature, structure, material, or characteristic associated with the embodiment or example is included in at least one embodiment or example of the present invention. The schematic representations of the above terms do not necessarily refer to the same embodiment or example. Further, the particular feature, structure, material, or characteristic described may be included in any one or more embodiments or examples in any suitable manner.

Hereinafter, the terms "first" and "second" are used for descriptive purposes only and are not to be construed as indicating or implying relative importance or implicitly specifying the number of technical features indicated. Thus, a feature defined with "first" or "second" may explicitly or implicitly include one or more such features. In the description of the embodiments of the present invention, "a plurality of" means two or more unless otherwise specified.

In describing some embodiments, the expressions "coupled" and "connected" and derivatives thereof may be used. For example, some embodiments may be described using the term "connected" to indicate that two or more components are in direct physical or electrical contact with each other. For another example, some embodiments may be described using the term "coupled" to indicate that two or more components are in direct physical or electrical contact with each other. However, the term "coupled" or "communicatively coupled" may also mean that two or more components are not in direct contact with each other, but still co-operate or interact with each other. The embodiments disclosed herein are not necessarily limited to the disclosure herein.

"At least one of A, B, and C" has the same meaning as "at least one of A, B, or C", and includes the following combinations of A, B, and C: A alone, B alone, C alone, a combination of A and B, a combination of A and C, a combination of B and C, and a combination of A, B, and C.

"A and/or B" includes the following three combinations: A alone, B alone, and a combination of A and B.

As used herein, depending on the context, the term "if" is optionally interpreted to mean "when..." or "upon..." or "in response to determining" or "in response to detecting". Similarly, depending on the context, the phrase "if it is determined that..." or "if [the stated condition or event] is detected" is optionally interpreted to mean "upon determination of..." or "in response to determining..." or "upon detection of [the stated condition or event]" or "in response to detection of [the stated condition or event]".

The use of "adapted to" or "configured to" herein means open and inclusive language that does not exclude devices adapted or configured to perform additional tasks or steps.

Additionally, the use of "based on" is meant to be open and inclusive in that a process, step, calculation, or other action "based on" one or more of the stated conditions or values may, in practice, be based on additional conditions or go beyond the stated values.

As used herein, "about," "substantially," or "approximately" includes the stated value as well as an average value that is within an acceptable range of deviation from a specific value, as determined by those ordinary skilled in the art in view of the measurement in question and the errors associated with the measurement of a specific quantity (i.e., limitations of the measurement system).

As used herein, "parallel", "perpendicular", and "equal" include the stated conditions as well as conditions approximating the stated conditions within an acceptable range of deviation, as determined by those ordinary skilled in the art in view of the measurement in question and the errors associated with the measurement of a specific quantity (i.e., limitations of the measurement system). For example, "parallel" includes absolutely parallel and approximately parallel, where the acceptable range of deviation for approximately parallel may be, for example, within 5°, and "perpendicular" includes absolutely perpendicular and approximately perpendicular, where the acceptable range of deviation for approximately perpendicular may also be, for example, within 5°. "Equal" includes absolutely equal and approximately equal, where the acceptable range of deviation for approximately equal may be, for example, that the difference between the two equivalents is less than or equal to 5% of either.

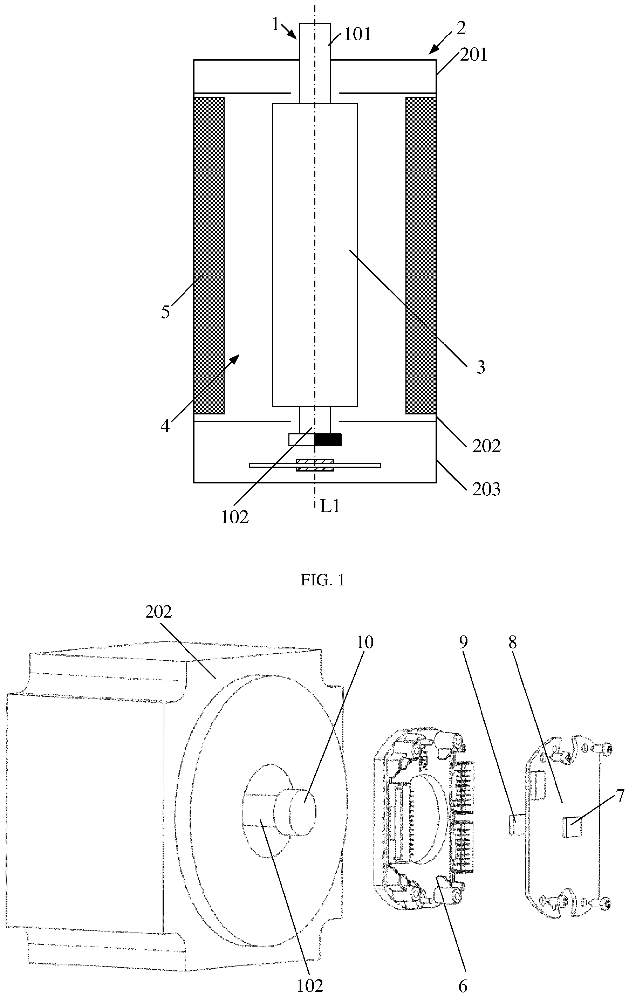

Some embodiments of the present invention provide a motor. As shown in FIG. 1, the motor includes a motor housing 2, a motor stator 5, a motor rotor 3, and a motor shaft 1. The motor housing 2 is of a housing structure provided with a motor cavity 4, which provides a mounting space and a mounting structure for other parts of the motor.

The motor stator 5 is disposed in the motor cavity 4 and is fixedly mounted to the motor housing 2. The motor rotor 3 is rotatably mounted in the motor cavity 4 and is connected to the motor shaft 1. In some embodiments, the motor stator 5 includes a stator winding including a plurality of coils or groups of coils which, when energized, is capable of generating a corresponding stator magnetic field. The motor rotor 3 adopts permanent magnets and is capable of generating a rotor magnetic field. The stator magnetic field generated by the stator winding after energized interacts with the rotor magnetic field generated by the motor rotor 3, so as to realize the purpose of driving the motor rotor 3 to rotate around an axis.

In some other possible embodiments, the motor stator 5 adopts permanent magnets and is capable of generating a stator magnetic field. The motor rotor 3 includes a rotor winding including a plurality of coils or groups of coils which, after energized, is capable of generating a corresponding rotor magnetic field. The stator magnetic field generated by the motor stator 5 interacts with the rotor magnetic field generated by the rotor winding after energized, so as to realize the purpose of driving the motor rotor 3 to rotate around an axis.

The motor shaft 1 is a shaft-like structure with a first axis L1 as a central axis, and an axis of rotation of the motor rotor 3 under the action of the rotor magnetic field and the stator magnetic field is co-linear with the first axis L1. The motor shaft 1 includes an output end 101 extending out of the motor cavity 4, and a mounting end 102 opposite to the output end 101, the mounting end 102 being disposed within the motor cavity 4.

In some embodiments, the motor housing 2 includes a main body 202, and a front end cover 201 and a rear end cover 203 disposed at opposite ends of the main body 202 along the first axis L1. The front end cover 201 is disposed at an end of the main body 202 close to the output end 101 of the motor shaft 1, and the rear end cover 203 is disposed at an end of the main body 202 close to the mounting end 102 of the motor shaft 1. The main body 202, the front end cover 201, and the rear end cover 203 together define the motor cavity 4.

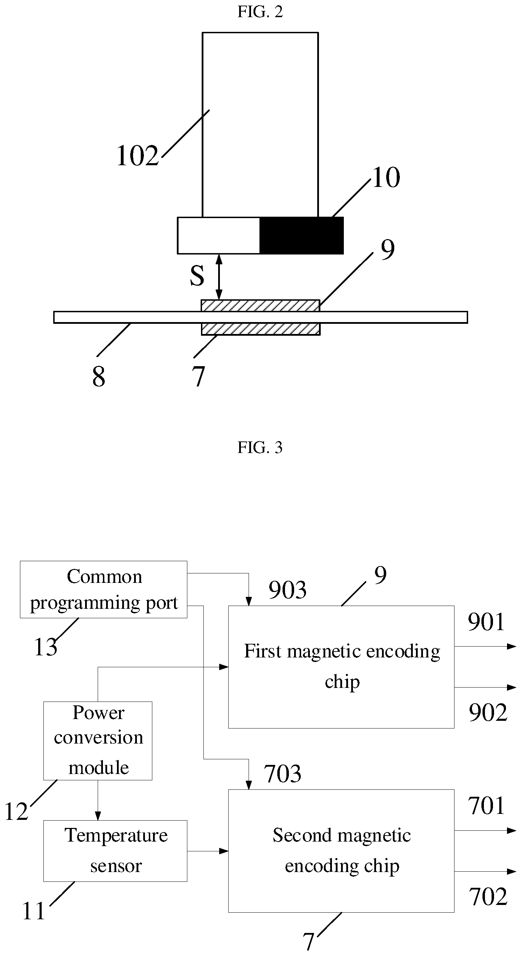

FIG. 2 is an exploded view of a motor according to an embodiment of the present invention at a mounting end. As shown in FIG. 2, the motor according to some embodiments of the present invention further includes a magnetic disc 10, a first magnetic encoding chip 9, a second magnetic encoding chip 7, a printed circuit board (PCB) 8, and an encoder bracket 6.

The magnetic disc 10 is of a magnetized permanent magnet structure including a single pair of magnetic poles or a plurality of pairs of magnetic poles, each of which includes magnetic poles with different polarities arranged symmetrically with respect to an axis of symmetry. The number of magnetic pole pairs of the magnetic disc 10 is not limited in the motor according to the embodiments of the present invention.

Herein, the axis of symmetry of the magnetic pole pairs in the magnetic disc 10 is defined as a second axis. In some embodiments, the magnetic disc 10 is of a circular disc structure with the second axis as a central axis, in which the magnetic poles are arranged in a radially magnetized manner. The magnetic disc 10 is disposed on an end surface of the mounting end 102 of the motor shaft 1, and the second axis coincides with the first axis L1 after the magnetic disc 10 is mounted and fixed. In other words, in the magnetic disc 10 in a mounted state, the magnetic poles with different polarities in each magnetic pole pair are symmetrically arranged on both sides of the central axis of the motor shaft 1.

In some embodiments, a mounting member is further disposed between the motor shaft 1 and the magnetic disc 10, the magnetic disc 10 is fixed to the mounting member in an embedded manner, and the mounting member is fixedly disposed around the mounting end 102 of the motor shaft 1, such that the magnetic disc 10 is connected to the motor shaft 1 through the mounting member. The mounting member may be made of a metallic material, such as copper or aluminum, or may be made of a non-metallic material, such as plastic.

Corresponding to the embodiment in which the magnetic disc 10 is of a circular disc structure, the mounting member is of a sleeve structure disposed around an outer rim of the magnetic disc 10, with the other end of the sleeve structure fixedly disposed around the mounting end 102 of the motor shaft 1.

The magnetic disc 10 mounted on the motor shaft 1 rotates synchronously with the motor shaft 1, that is, rotates synchronously with the motor rotor 3. Since an axis of rotation of the motor shaft 1 is the first axis L1, the axis of rotation of the motor rotor 3 is the first axis L1. Moreover, the second axis coincides with the first axis L1 after the magnetic disc 10 is mounted and fixed. Therefore, the magnetic pole pairs on the magnetic disc 10 rotate around the axis of symmetry (the second axis), when the magnetic disc 10 rotates synchronously with the motor shaft 1.

In some embodiments of the motor according to the present invention, the PCB 8 is disposed on an opposite side of the magnetic disc 10 away from the motor shaft 1, and the PCB 8 is mounted in the motor cavity 4 in a posture perpendicular to the first axis L1. The first magnetic encoding chip 9 and the second magnetic encoding chip 7 are provided on the PCB 8.

Each of the first magnetic encoding chip 9 and the second magnetic encoding chip 7 includes a Hall sensor for sensing a magnetic field and a conversion circuit. When the magnetic disc 10 rotates with the motor shaft 1, the magnetic pole pairs on the magnetic disc 10 also rotate around the axis of symmetry. The magnetic field generated by the magnetic disc 10 changes during rotation of the magnetic pole pairs, such that the Hall sensors in the first magnetic encoding chip 9 and the second magnetic encoding chip 7 can generate different analog signals, such as sine and/or cosine waveform signals, where the analog signals are related to the rotational displacement of the magnetic disc 10.

The conversion circuits in the first magnetic encoding chip 9 and the second magnetic encoding chip 7 convert the analog signals output from the Hall sensors into digital quantities, thereby converting the rotational displacement into a periodic electrical signal, which is then converted into count pulses. The number of the pulses is used to indicate the magnitude of the rotational displacement.

As can be seen from the above, the magnetic disc 10 and the first magnetic encoding chip 9 form an incremental magnetic encoder, which is defined herein as a first magnetic encoder, and the magnetic disc 10 and the second magnetic encoding chip 7 form an incremental magnetic encoder, which is defined herein as a second magnetic encoder. The first magnetic encoder and the second magnetic encoder share a common magnetic disc 10.

The first magnetic encoding chip 9 and the second magnetic encoding chip 7 may be the same chip or different chips. In the embodiments of the present invention, the case where the first magnetic encoding chip 9 and the second magnetic encoding chip 7 are the same chip is described and illustrated as an example.

The first magnetic encoding chip 9 and the second magnetic encoding chip 7 are disposed on opposite sides of the PCB 8, respectively. The PCB 8 is mounted to the encoder bracket 6 through threaded fasteners. The encoder bracket 6 is fixedly disposed on the motor housing 2 and is located within the motor cavity 4. In some embodiments, the encoder bracket 6 is fixedly connected to the main body 202 by means of threaded fasteners, snap fasteners, welding, adhesive bonding, etc. After the rear end cover 203 of the motor housing 2 is connected to the main body 202, the magnetic disc 10, the first magnetic encoding chip 9, the second magnetic encoding chip 7, the PCB 8, and the encoder bracket 6 are enclosed in the motor cavity 4.

The PCB 8 is mounted such that the first magnetic encoding chip 9 and the second magnetic encoding chip 7 are positioned opposite to the magnetic disc 10.

FIG. 3 is a schematic structural diagram of a motor according to an embodiment of the present invention at a mounting end. Referring to FIG. 2 and FIG. 3, since the first magnetic encoding chip 9 and the second magnetic encoding chip 7 are disposed on opposite sides of the PCB 8, and the PCB 8 has a certain thickness, a distance between the first magnetic encoding chip 9 and the magnetic disc 10 is different from a distance between the second magnetic encoding chip 7 and the magnetic disc 10, and intensities of the magnetic fields generated by the magnetic disc 10 at the positions of the first magnetic encoding chip 9 and the second magnetic encoding chip 7 are also different from each other.

In order to ensure that the first magnetic encoding chip 9 and the second magnetic encoding chip 7 are both operated within a range of magnetic field intensities for normal operation, it is necessary to limit the size of the magnetic disc 10, a thickness of the magnetic disc 10, and the positional relationships between the first magnetic encoding chip 9 and the magnetic disc 10, and between the second magnetic encoding chip 7 and the magnetic disc 10.

In some embodiments of the present invention, the first magnetic encoding chip 9 is closer to the magnetic disc 10 than the second magnetic encoding chip 7. There is a gap between the first magnetic encoding chip 9 and the magnetic disc 10 in a direction of the first axis L1, where a length S of the gap is 0.5 mm to 3 mm. The distance between the second magnetic encoding chip 7 and the magnetic disc 10 is the gap between the first magnetic encoding chip 9 and the magnetic disc 10 plus the thickness of the PCB 8 and a thickness of the first magnetic encoding chip, where the thickness of the PCB 8 is 0.8 mm to 1 mm.

In some embodiments of the present invention, the magnetic disc 10 is of a circular-disc-like structure with a diameter of 8 mm to 20 mm and a thickness of 2.5 mm.

In a specific example, the magnetic disc 10 has a diameter of 10 mm and a thickness of 2.5 mm.

In the motor according to the embodiments of the present invention, on one hand, a "dual magnetic encoder" design is adopted to enable contactless rotational displacement measurement, which is beneficial to reducing the risk of failure of or even damage to the encoder due to factors such as motor environment and operating state, and thus contributes to improving the stability and reliability of the operation of the motor.

On another hand, the first magnetic encoding chip 9 and the second magnetic encoding chip 7 in the "dual magnetic encoder" are disposed on opposite sides of the PCB 8, respectively, and the PCB 8 is located within the motor cavity 4 and is mounted to the motor housing 2 through fasteners. In this way, while meeting the requirements of the "dual encoder" design of the motor, it is possible to ensure the mounting accuracy through the same PCB 8, reducing the requirements for the mounting accuracy while facilitating the debugging of the dual magnetic encoders. The first magnetic encoding chip 9 and the second magnetic encoding chip 7 are disposed on opposite sides of the PCB 8 in the motor cavity 4, so as to make full use of space, which is beneficial to reducing the overall volume of the motor. Moreover, the first magnetic encoding chip 9 and the second magnetic encoding chip 7 are both located in the motor cavity 4, which is beneficial to reducing the influence of the external environment, thereby improving the stability and reliability of the operation of the motor.

On yet another hand, in the "dual magnetic encoder" design, the first magnetic encoding chip 9 and the second magnetic encoding chip 7 are backups for each other and work together, which is helpful to improve the safety, stability and reliability of the operation of the motor.

Based on the above description, the magnetic disc 10 and the first magnetic encoding chip 9 form an incremental magnetic encoder, and the magnetic disc 10 and the second magnetic encoding chip 7 form an incremental magnetic encoder.

The incremental magnetic encoder can output incremental encoded signals, which can be ABZ encoded signals. The incremental magnetic encoder includes three signal output channels: an A signal output channel, a B signal output channel, and a Z signal output channel, which are used for A-phase, B-phase, and Z-phase signal outputs, respectively. The A-phase, B-phase, and Z-phase are indicative of three groups of pulse signals. The A-phase and the B-phase are generally indicative of pulse outputs with a 1/4 cycle delay (i.e., 90° difference) between each other. Forward rotation and reverse rotation of the incremental magnetic encoder can be distinguished from each other according to the delay relationship, namely, the forward rotation and the reverse rotation of the incremental magnetic encoder can be distinguished from each other by judging whether the A-phase is in front or the B-phase is in front. Moreover, frequency can be doubled or quadrupled by taking rising and falling edges of the A-phase and the B-phase, so as to increase the number of pulses output from the encoder per cycle, to increase the measurement accuracy, and to reduce the control error. The Z-phase is indicative of a single-turn pulse, that is, one pulse is emitted per turn, which is used to represent the zero reference position.

In the embodiment of the motor in which the motor rotor 3 adopts permanent magnets, the motor does not need a commutator and an electric brush, but needs to detect positions of magnetic poles of the motor rotor 3 so as to control the stator winding to generate a stator magnetic field matching the rotor magnetic field, such that the motor rotor 3 rotates normally. Therefore, the incremental magnetic encoder needs to output Hall signals capable of determining the positions of the magnetic poles of the motor rotor 3.

Correspondingly, in the embodiments of the present invention, the incremental magnetic encoder can output Hall signals related to the positions of the magnetic poles of the motor rotor 3, and the positions of the magnetic poles of the motor rotor 3 can be determined from the Hall signals, which is conducive to the drive control of the motor.

Exemplarily, the Hall signal may be a UVW Hall signal, and the incremental magnetic encoder includes three signal output channels: a U signal output channel, a V signal output channel, and a W signal output channel.

Since the incremental magnetic encoder has a fixed mechanical angle with the magnetic pole of the motor rotor 3, it is necessary to obtain the fixed mechanical angle when determining the position of the magnetic pole of the motor rotor 3 from the UVW Hall signal. The obtained mechanical angle is programmed into the incremental magnetic encoder to facilitate the driving of the motor during operation of the motor, which is known as the "zeroing" process.

The incremental magnetic encoder can output the encoded signal ABZ and the Hall signal UVW through separate channels, or output the encoded signal ABZ and the Hall signal UVW through the same output channel in a time-sharing manner.

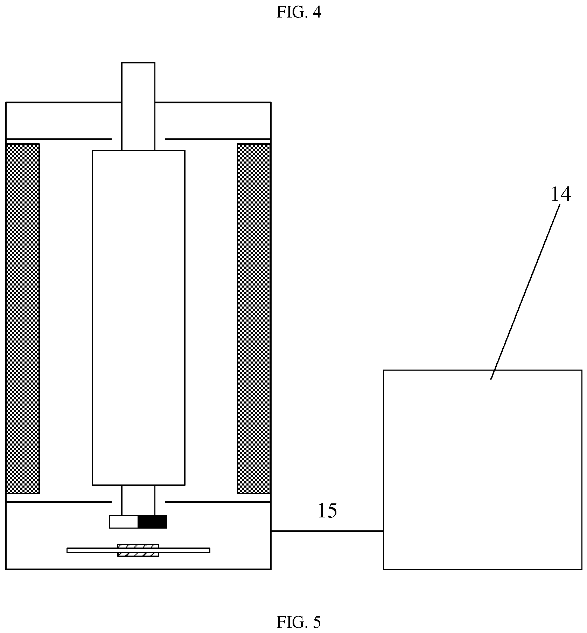

FIG. 4 is an architecture diagram of a printed circuit board and first and second magnetic encoding chips on the printed circuit board in a motor according to an embodiment of the present invention. As shown in FIG. 4, in some embodiments, the first magnetic encoding chip 9 has a first encoding output terminal 901 for outputting a first encoded signal and a first Hall output terminal 902 for outputting a first Hall signal. The first encoded signal is an ABZ encoded signal, and the first encoding output terminal 901 includes an A signal output channel, a B signal output channel, and a Z signal output channel. The first Hall signal is a UVW Hall signal, and the first Hall output terminal 902 includes a U signal output channel, a V signal output channel, and a W signal output channel. The first encoding output terminal 901 and the first Hall output terminal 902 may be the same output terminal, and the first encoded signal and the first Hall signal are output in a time-sharing manner.

The second magnetic encoding chip 7 has a second encoding output terminal 701 for outputting a second encoded signal, and a second Hall output terminal 702 for outputting a second Hall signal. The second encoded signal is an ABZ encoded signal, and the second encoding output terminal 701 includes an A signal output channel, a B signal output channel, and a Z signal output channel. The second Hall signal is a UVW Hall signal, and the second Hall output terminal 702 includes a U signal output channel, a V signal output channel, and a W signal output channel. The second encoding output terminal 701 and the second Hall output terminal 702 may be the same output terminal, and the second encoded signal and the second Hall signal are output in a time-sharing manner.

With continued reference to FIG. 4, in some embodiments, the PCB 8 further includes a power conversion module 12. The power conversion module 12 is configured to convert an input voltage into an operating voltage of components on the PCB 8, and output the operating voltage to the corresponding components. For example, the power conversion module 12 is configured to convert an input voltage into an operating voltage of the first magnetic encoding chip 9 and the second magnetic encoding chip 7, and output the operating voltage to the first magnetic encoding chip 9 and the second magnetic encoding chip 7.

In some embodiments, the PCB 8 is provided with a temperature sensor 11 between the power conversion module 12 and the second encoding chip, so as to prevent the PCB 8 from operating the second encoding chip at too high a voltage. The temperature sensor 11 can monitor the temperature of the motor, and cut off power supply between the power conversion module 12 and the second encoding chip when the detected temperature is higher than a preset value, so as to control the magnetic encoder to report an error and stop the operation of the motor. Thus it can be seen that the temperature sensor 11 can be provided to ensure that the motor is operated at a suitable temperature to avoid high temperature damage.

In another possible embodiment, the temperature sensor 11 may be disposed between the power conversion module 12 and the first encoding chip, or the temperature sensor 11 may be disposed between the power conversion module 12 and the first encoding chip, as well as between the power conversion module 12 and the second encoding chip, which operates on the same principle of operation as described above and will not be repeated herein.

In some embodiments, the first magnetic encoding chip 9 is provided with a first programming port 903, and the second magnetic encoding chip 7 is provided with a second programming port 703. The PCB 8 is provided with a common programming port 13, which is connected to both the first programming port 903 and the second programming port 703. In this way, the first magnetic encoding chip 9 and the second magnetic encoding chip 7 can be programmed through a single programming port, which is conducive to programming, adjustment, and other operations.

It should be noted that, in the motor according to the above embodiments, since the first magnetic encoding chip 9 and the second magnetic encoding chip 7 are disposed on opposite sides of the PCB 8, respectively, the first magnetic encoding chip 9 and the second magnetic encoding chip 7 correspond to different rotation directions, and need to be programmed with different parameters for the rotation directions. Also, it is necessary to set the resolution and the number of pole pairs according to the properties of the motor. Therefore, during programming, the first magnetic encoding chip 9 and the second magnetic encoding chip 7 are automatically identified through check bits of the first magnetic encoding chip 9 and the second magnetic encoding chip 7, and then are programmed with information according to forward and backward positions of the first magnetic encoding chip 9 and the second magnetic encoding chip 7.

The motor according to the embodiments of the present invention may be any motor that needs to detect the rotation of the motor shaft 1, such as a synchronous motor or a servo motor. In the case of a servo motor, for example, the servo motor further includes a servo driver, which converts a received electrical signal into an angular velocity output or an angular displacement output on the motor shaft 1.

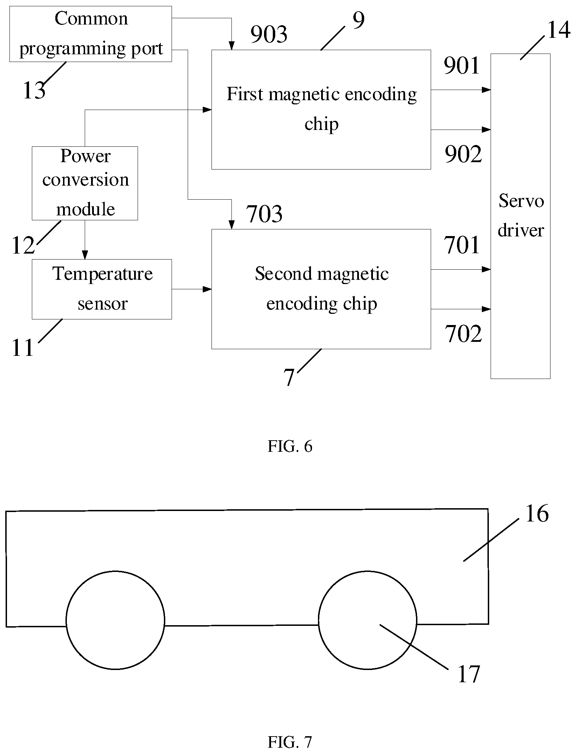

FIG. 5 is a schematic structural diagram of a servo motor according to an embodiment of the present invention, and FIG. 6 is an architecture diagram of a printed circuit board and a servo driver in a servo motor according to an embodiment of the present invention. As shown in FIG. 5 and FIG. 6, in the servo motor, the PCB 8 is connected to the servo driver 14 via a signal transmission cable 15. The servo driver 14 is electrically connected to the first encoding output terminal 901 and the first Hall output terminal 902 in the first magnetic encoding chip 9, and the second encoding output terminal 701 and the second Hall output terminal 702 in the second magnetic encoding chip 7 via the signal transmission cable 15.

In some embodiments, the servo driver 14 controls the servo motor based on the first encoded signal and the second Hall signal, and is configured to report an error upon at least one of the first encoded signal or the second Hall signal is abnormal. In other embodiments, the servo driver 14 controls the servo motor based on the second encoded signal and the first Hall signal, and is configured to report an error upon at least one of the second encoded signal or the first Hall signal is abnormal.

In other words, both the first magnetic encoding chip 9 and the second magnetic encoding chip 7 have the function of outputting the encoded signal and the Hall signal, but when the servo motor is operated, the servo driver uses one of the signals from the first magnetic encoding chip 9 and the other one of the signals from the second encoding chip for servo control, so as to realize the dual-loop safety setting.

In addition, the servo driver 14 can realize the function of cross-check according to the signals output from the first magnetic encoding chip 9 and the second magnetic encoding chip 7. Only when the first magnetic encoding chip 9 and the second magnetic encoding chip 7 output correct signals at the same time can the signals enter the servo driver 14. If the servo driver 14 cannot receive correct signals, the servo driver 14 will report an exception, and stop the servo motor to ensure the safe operation of the servo motor.

Exemplarily, the first magnetic encoding chip 9 outputs an ABZ encoded signal to the servo driver 14, and the second magnetic encoding chip 7 outputs a UVW Hall signal to the servo driver 14.

Exemplarily, the first magnetic encoding chip 9 outputs a UVW Hall signal to the servo driver 14, and the second magnetic encoding chip 7 outputs an ABZ encoded signal to the servo driver 14.

Embodiments of the present invention further provide an automated guided vehicle (AGV). As shown in FIG. 7, the AGV includes a vehicle body 16, an actuator mounted to the vehicle body 16, and a motor for driving the actuator to be actuated, where the motor is designed using the schemes in the above embodiments.

The actuator can be a walking structure of the AGV, or an action mechanism, etc. By way of example, in this embodiment, the motor drives walking wheels 17 to rotate, so as to realize the walking of the AGV.

For example, the actuator can be a manipulator mounted on the vehicle body 16, which is driven and actuated by the motor.

The AGV adopts the motor in the above embodiments, and has the same beneficial technical effects as the motor according to some of the above embodiments, which will not be repeated herein.

Finally, it should be noted that the above embodiments are only used to illustrate the technical solutions of the present invention, and are not intended to limit the present invention. Although the present invention has been described in detail with reference to the foregoing embodiments, those ordinary skilled in the art should understand that they may modify the technical solutions described in the foregoing embodiments, or substitute some or all of the technical features therein with equivalent ones. These modifications or substitutions do not make the essence of the corresponding technical solutions deviate from the scope of the technical solutions of the embodiments of the present invention.

## Claims

1. A motor, comprising:
a motor housing provided with a motor cavity;
a motor stator and a printed circuit board fixedly mounted in the motor cavity;
a motor rotor rotatably mounted in the motor cavity;
a magnetic disc rotatable synchronously with the motor rotor; and
a first magnetic encoding chip and a second magnetic encoding chip disposed on opposite sides of the printed circuit board,
wherein each of the first magnetic encoding chip and the second magnetic encoding chip cooperates with the magnetic disc to form a magnetic encoder.

2. The motor of claim 1, wherein the motor comprises a motor shaft connected to the motor rotor, the motor shaft comprising:
an output end extending out of the motor cavity; and
a mounting end opposite to the output end and disposed in the motor cavity,
wherein the magnetic disc is disposed on an end surface of the mounting end.

3. The motor of claim 2, wherein the printed circuit board is disposed on an opposite side of the magnetic disc away from the motor shaft, and the first magnetic encoding chip and the second magnetic encoding chip are located opposite to the magnetic disc.

4. The motor of claim 3, wherein the motor shaft is of a shaft-like structure with a first axis as a central axis;
the first magnetic encoding chip is closer to the magnetic disc than the second magnetic encoding chip; and
there is a gap between the first magnetic encoding chip and the magnetic disc along a direction of the first axis.

5. The motor of claim 4, wherein the magnetic disc is a circular disc with the first axis as a central axis, and the magnetic disc is of a radially magnetized permanent magnet structure comprising a single pair of magnetic poles or a plurality of pairs of magnetic poles with the first axis as an axis of symmetry.

6. The motor of claim 4 or 5, wherein the gap between the first magnetic encoding chip and the magnetic disc along the direction of the first axis is 0.5 mm to 3 mm; and
the printed circuit board has a thickness of 0.8 mm to 1 mm.

7. The motor of claim 5 or 6, wherein the magnetic disc has a diameter of 8 mm to 20 mm and a thickness of 2.5 mm.

8. The motor of any one of claims 1 to 7, wherein each of the first magnetic encoding chip and the second magnetic encoding chip cooperates with the magnetic disc to form an incremental magnetic encoder;
the first magnetic encoding chip has:
a first encoding output terminal for outputting a first encoded signal; and
a first Hall output terminal for outputting a first Hall signal, and
the second magnetic encoding chip has:
a second encoding output terminal for outputting a second encoded signal, and
a second Hall output terminal for outputting a second Hall signal.

9. The motor of claim 8, wherein the first encoded signal and the second encoded signal are ABZ encoded signals, and each of the first encoding output terminal and the second encoding output terminal comprises an A signal output channel, a B signal output channel, and a Z signal output channel; and
the first Hall signal and the second Hall signal are UVW Hall signals, and each of the first Hall output terminal and the second Hall output terminal comprises a U signal output channel, a V signal output channel, and a W signal output channel.

10. The motor of claim 8 or 9, wherein the first encoding output terminal and the first Hall output terminal are a same output terminal, and the first encoded signal and the first Hall signal are output in a time-sharing manner;
and/or
the second encoding output terminal and the second Hall output terminal are a same output terminal, and the second encoded signal and the second Hall signal are output in a time-sharing manner.

11. The motor of any one of claims 8 to 10, wherein the motor is a servo motor, which further comprises a servo driver;
the first encoding output terminal, the first Hall output terminal, the second encoding output terminal, and the second Hall output terminal are electrically connected to the servo driver; and
the servo driver controls the servo motor based on output signals from the first magnetic encoding chip and the second magnetic encoding chip.

12. The motor of claim 11, wherein the servo driver controls the servo motor based on the first encoded signal and the second Hall signal, and is configured to report an error upon at least one of the first encoded signal or the second Hall signal is abnormal; or
the servo driver controls the servo motor based on the second encoded signal and the first Hall signal, and is configured to report an error upon at least one of the second encoded signal or the first Hall signal is abnormal.

13. The motor of any one of claims 1 to 12, wherein the printed circuit board comprises:
a power conversion module configured to output an operating voltage to the first magnetic encoding chip and the second magnetic encoding chip; and
a temperature sensor disposed between the first magnetic encoding chip and the power conversion module and/or between the second magnetic encoding chip and the power conversion module,
wherein the temperature sensor is configured to cut off power supply when a temperature detected by the temperature sensor is higher than a preset value.

14. The motor of any one of claims 1 to 13, wherein the first magnetic encoding chip has a first programming port, and the second magnetic encoding chip has a second programming port; and
the printed circuit board is provided with a common programming port, which is connected to the first programming port and the second programming port.

15. An automated guided vehicle, comprising:
a vehicle body;
an actuator mounted to the vehicle body; and
the motor of any one of claims 1 to 14,
wherein the motor drives the actuator to be actuated.
